# FASCICULE DE BREVET EUROPEEN

(11) **EP 1 650 403 B1**
(45) Date de publication et mention de la délivrance du brevet: **12.03.2008**
(21) Numéro de dépôt: 05292135.0
(22) Date de dépôt: 12.10.2005
(51) Int. Cl.: F01C 17/06, F16D 1/08, F04C 2/107, F04C 15/00

(54) **Dispositif de pompage a pompe a cavites progressives**
Exzenter- Schneckenpumpenaggregat
Progressive cavity pump unit

(30) Priorité: 20.10.2004 FR 0411160
(43) Date de publication de la demande: 26.04.2006
(73) Titulaire: PCM POMPES, 92170 Vanves (FR)
(72) Inventeur: Marielle, Jean-Pierre, 76240 Le Mesnil Esnard (FR)
(74) Mandataire: Gorrée, Jean-Michel

(56) Documents cités:
- DE-C1- 3 816 581
- US-A- 3 539 279
- US-A- 4 237 704
- PATENT ABSTRACTS OF JAPAN vol. 014, no. 454 (M-1031), 28 septembre 1990 (1990-09-28) -& JP 02 181081 A (KYOCERA CORP), 13 juillet 1990 (1990-07-13)

## Description

La présente invention se situe dans le domaine des pompes à cavités progressives ou pompes Moineau.

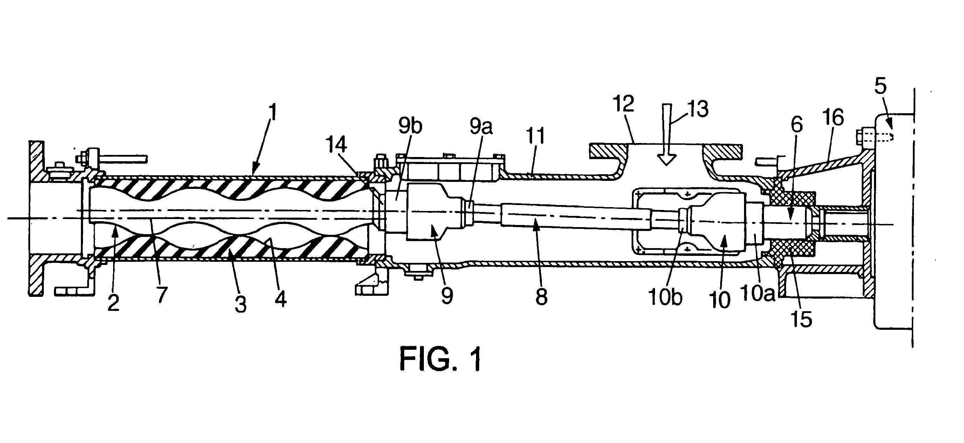

L'invention concerne plus particulièrement des perfectionnements apportés à un agencement classique d'un tel dispositif de pompage qui est illustré à la figure 1 des dessins annexés, ce dispositif de pompage comportant :
- une pompe à cavités progressives 1 comprenant un rotor hélicoïdal 2 intérieur à une cavité hélicoïdale 4 d'un stator extérieur 3 ;
- des moyens moteurs 5 pour entraîner le rotor 2, lesdits moyens moteurs entraînant un arbre moteur 6 sensiblement coaxial à l'axe 7 de la cavité statorique 4 ;
- un arbre intermédiaire 8 qui est accouplé en rotation respectivement à l'arbre moteur 6 et à l'arbre 14 du rotor 2 ;
- un premier accouplement articulé 10 ayant une extrémité solidarisée à l'arbre moteur 6 et son autre extrémité solidarisée à l'arbre intermédiaire 8 ;
- un second accouplement articulé 9 ayant une extrémité solidarisée à l'arbre intermédiaire 8 et son autre extrémité solidarisée à l'arbre 14 du rotor 2 ; et
- des moyens de solidarisation pour solidariser au moins deux des susdits organes solidarisés.

En outre, un carter 11 abrite l'arbre intermédiaire 8 et est solidarisé de manière étanche au stator 2 de la pompe 1, ce carter possédant une ouverture latérale 12 constituant l'entrée (flèche 13) du produit devant être refoulé par la pompe 1.

De façon traditionnelle, l'arbre moteur 6 est extérieurement lisse et il est enserré par un organe d'étanchéité 15, par exemple du type presse-étoupe, qui est maintenu axialement par un carter intermédiaire (ou bride) 16 assurant la liaison structurelle entre l'extrémité du carter 11 précité et le carter des moyens moteurs 5.

Le document US 3539279 décrit un dispositif de pompage correspondant au préambule de la revendication 1.

Bien que largement employé jusqu'à présent, cet agencement connu présente cependant divers inconvénients.

Tout d'abord, tous les organes solidarisés, en rotation et axialement, sont classiquement solidarisés au moyen de goupilles, en général des goupilles diamétrales. Or, une liaison par goupille nécessite que les organes solidarisés soient percés diamétralement. La présence de ces perçages diamétraux affaiblit sensiblement les pièces, de sorte que les couples susceptibles d'être transmis sont moindres que ceux qui pourraient être transmis par des pièces pleines. Autrement dit, la transmission d'un couple donné nécessite de surdimensionner les organes solidarisés par goupille, ce qui est pénalisant pour les masses en rotation et pour le poids, et donc le prix, de ces organes.

Egalement, le fonctionnement correct d'un tel agencement nécessite des jeux aussi réduits que possible ; notamment, la goupille doit être engagée sans jeu notable dans les perçages mutuellement alignés des organes à solidariser. Or, la mise en place de la goupille lors du montage implique un alignement des perçages des organes à solidariser qui doit être d'autant plus précis, et donc délicat à obtenir, que les perçages sont dimensionnellement mieux ajustés au diamètre de la goupille. Mais alors, le montage de la goupille devient une opération difficile exigeant un personnel qualifié.

Enfin, des jeux, même aussi réduits que possible, subsistent entre la goupille et les organes solidarisés. Notamment, en cours de fonctionnement, la rotation excentrée de l'arbre du rotor par rapport à l'arbre moteur (lequel est coaxial à l'axe du stator) fait que l'arbre intermédiaire se meut sur une enveloppe conique. Il en résulte des mouvements de rotation des organes (extrémités des accouplements articulés et extrémités des arbres correspondants) qui sont solidarisés autour de la goupille ; ces mouvements sont certes de très faible amplitude, mais ils entraînent un échauffement qui est d'autant plus important que le jeu est faible et qui, à la longue, provoque une soudure superficielle des organes (phénomène de "fritting") rendant le démontage compliqué, long et donc coûteux.

L'invention a pour objet de remédier, au moins en partie, aux inconvénients qui viennent d'être exposés et de proposer un agencement perfectionné qui donne mieux satisfaction aux diverses exigences de la pratique, notamment en terme de simplicité structurelle, de simplicité de montage et de démontage, et de coûts.

A ces fins, un dispositif de pompage tel que mentionné au préambule se caractérise, étant agencé conformément à l'invention, en ce que lesdits deux organes solidarisés sont agencés sous forme d'un organe mâle comprenant un embout axial et d'un organe femelle comprenant un logement axial propre à recevoir ledit embout sans jeu notable, en ce que la paroi latérale définissant ledit logement axial de l'organe femelle est munie d'au moins deux perçages taraudés radiaux, décalés angulairement et non mutuellement alignés et abritant respectivement deux vis dont une au moins est une vis pointeau, et en ce que ledit embout axial de l'organe mâle comporte au moins deux évidements radiaux situés respectivement en regard desdits perçages radiaux et dont au moins un est conique ou tronconique en regard de la susdite vis pointeau pour recevoir l'extrémité de celle-ci.

Grâce à ces dispositions, les deux organes à solidariser n'ont plus besoin d'être positionnés angulairement avec précision l'un par rapport à l'autre : les deux organes étant approximativement mutuellement orientés, c'est la vis pointeau qui, au cours de son vissage, va les amener dans une orientation précise correcte alors que son extrémité pénètre à fond dans l'évidement conique prévu dans l'organe mâle. Il en résulte une importante simplification du processus d'accouplement.

Au surplus, les organes accouplés ne sont plus percés diamétralement : ils conservent donc leur résistance mécanique et il devient alors possible de transmettre un couple notablement supérieur (typiquement supérieur de l'ordre de 30%). Autrement dit, pour la transmission d'un couple donné, les organes accouplés peuvent être plus petitement dimensionnés, et deviennent donc moins coûteux.

De préférence, la paroi latérale du logement axial de l'organe femelle comporte trois perçages taraudés radiaux répartis angulairement et l'embout axial de l'organe mâle comporte trois évidements radiaux répartis angulairement et situés respectivement en regard des susdits perçages. Avantageusement alors, les perçages et évidements respectifs sont répartis angulairement de façon équidistante. Un tel montage ne nécessite plus un ajustage parfait entre les organes accouplés, ce qui non seulement réduit les coût d'usinage et facilite le montage, mais aussi élimine le phénomène de "fritting" mentionné plus haut ; les organes peuvent alors être démontés de façon plus facile et plus rapide.

Selon les constructions envisagées, on peut prévoir que toutes les vis soient des vis pointeau et que tous les évidements soient coniques ou tronconiques, ou bien aussi qu'une seule vis soit une vis pointeau et que la ou les autres vis soient des vis à téton en regard desquelles les évidements respectifs de l'embout sont cylindriques de révolution.

Les dispositions conformes à l'invention étant d'ordre général, elles peuvent être mises en oeuvre pour solidariser au moins deux organes de l'équipage tournant du dispositif de pompage.

Ainsi, on peut envisager que c'est l'arbre du rotor qui est agencé pour former l'organe mâle et c'est l'extrémité correspondante du second accouplement articulé qui est agencée pour former l'organe femelle ; et/ou que c'est l'arbre intermédiaire qui est agencé pour former l'organe mâle et c'est l'extrémité correspondante du second accouplement articulé qui est agencée pour former l'organe femelle ; et/ou que c'est l'arbre intermédiaire qui est agencé pour former l'organe mâle et c'est l'extrémité correspondante du premier accouplement articulé qui est agencée pour former l'organe femelle ; et/ou c'est l'arbre moteur qui est agencé pour former l'organe mâle et c'est l'extrémité correspondante du premier accouplement articulé qui est agencée pour former l'organe femelle. En pratique, il peut être prévu que l'arbre moteur comprenne un arbre de liaison ou entraîneur interposé entre un arbre de sortie des moyens moteurs et ladite extrémité correspondante du premier accouplement articulé : dans ce cas, c'est l'extrémité correspondante de l'entraîneur qui est agencée pour former l'organe mâle. Il est également possible que l'entraîneur abrite au moins en partie une fourrure amovible d'adaptation à un arbre de sortie de diamètre donné des moyens moteurs : dans ce cas, l'entraîneur est agencé pour former l'organe femelle et la fourrure d'adaptation est agencée pour former l'organe mâle.

L'invention sera mieux comprise à la lecture de la description détaillée qui suit de certains modes de réalisation préférés donnés uniquement à titre d'exemples purement illustratifs. Dans cette description, on se réfère aux dessins annexés sur lesquels :
- la figure 1 est une vue schématique d'ensemble, de côté, d'un dispositif de pompage visé par l'invention ;
- la figure 2 est une vue en coupe diamétrale de deux organes de la pompe de la figure 1 qui sont solidarisés conformément à l'invention ;
- les figures 3A et 3B sont deux vues, en coupe transversale selon la ligne III-III de la figure 2 et à plus grande échelle, illustrant respectivement deux exemples de réalisation possibles des dispositions de la figure 2 ; et
- les figures 4A et 4B sont des vues en coupe diamétrale illustrant la mise en oeuvre des dispositions de l'invention dans le cas de la solidarisation de l'arbre moteur à une extrémité d'accouplement articulé correspondant, respectivement dans deux exemples de réalisation possibles.

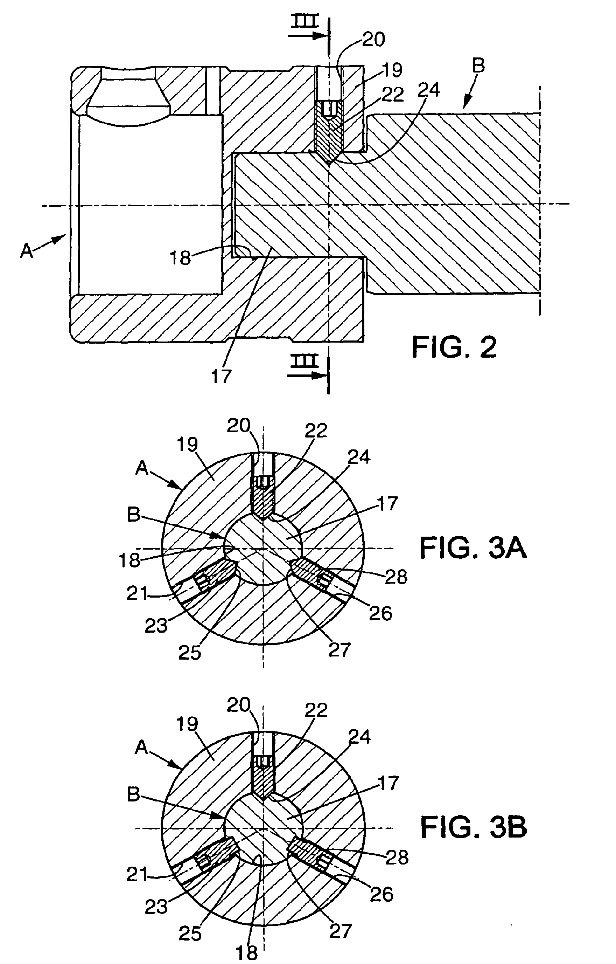

On va maintenant décrire les dispositions essentielles conformes à l'invention en se référant tout d'abord plus particulièrement à la figure 2. Bien que les dispositions conformes à l'invention soient susceptibles d'être mises en oeuvre pour solidariser n'importe quelle paire d'organes A et B solidarisés axialement et en rotation dans l'équipage mobile rotatif de la pompe montrée à la figure 1 comme cela apparaîtra mieux ultérieurement, on peut supposer, à titre d'exemple et pour mieux fixer les idées, que la figure 2 montre (en position inversée par rapport à la représentation de la figure 1) le demi-accouplement 10b (organe A) du premier accouplement articulé 10 et l'extrémité de l'arbre intermédiaire 8 (organe B).

Conformément à l'invention, les deux organes solidarisés A, B sont agencés sous forme d'un organe B mâle comprenant un embout 17 axial et d'un organe A femelle comprenant un logement 18 axial propre à recevoir ledit embout 17 sans jeu notable. Comme visible également aux figures 3A et 3B, la paroi latérale 19 définissant ledit logement 18 axial de l'organe A femelle est munie d'au moins deux perçages 20, 21 taraudés radiaux, décalés angulairement et non mutuellement alignés et abritant respectivement deux vis 22, 23 dont une 22 au moins est une vis pointeau. Enfin, l'embout 17 axial de l'organe B mâle comporte au moins deux évidements 24, 25 radiaux situés respectivement en regard desdits perçages 20, 21 radiaux de l'organe A femelle et dont au moins un 24 est conique ou tronconique en regard de la susdite vis pointeau 22 pour recevoir l'extrémité de celle-ci.

Grâce à cet agencement, les deux organes A et B peuvent être introduits l'un dans l'autre sans que les perçages 20, 21 et évidements 24, 25 respectifs aient besoin d'être mis en regard avec précision ; c'est la vis pointeau 22 qui, lors de son vissage, va amener les deux organes A, B dans une position mutuelle correcte, tant axialement qu'angulairement, de manière à mettre en alignement l'autre perçage et l'autre évidement permettant ainsi la mise en place aisée de l'autre vis 23. Du fait que les deux vis 22, 23 ne sont pas situées de façon diamétralement opposée et ne sont pas mutuellement alignées, ces deux vis ne forment pas un axe de rotation pour les deux organes A, B solidarisés. Ainsi, les deux organes A, B ne peuvent plus être animés de mouvements mutuels de pivotement et sont fermement maintenus l'un par rapport à l'autre.

Toutefois, le maintien relatif des deux organes A, B sera amélioré si la paroi latérale 19 du logement 18 de l'organe A femelle comporte trois perçages 20, 21 et 26 taraudés radiaux répartis angulairement et l'embout 17 axial de l'organe B mâle comporte trois évidements 24, 25 et 27 radiaux répartis angulairement et situés respectivement en regard des susdits perçages 20, 21 et 26 (la troisième vis étant désignée par 28), comme montré aux figures 3A et 3B. La solution offrant la solidarisation la plus efficace consiste en ce que les perçages 20, 21 et 26 et évidements 24, 25 et 27 respectifs soient répartis angulairement de façon équidistante (120°) comme montré aux figures 3A et 3B.

Différents exemples de mise en oeuvre de ces dispositions peuvent être envisagés. Un premier exemple consiste en ce que toutes les vis soient des vis pointeau et en ce que tous les évidements soient coniques ou tronconiques (exemple illustré aux figures 2 et 3A). Un autre exemple plus simple à mettre en oeuvre (un seul alésage conique à réaliser) consiste en ce qu'une seule vis 22 est une vis pointeau et en ce que la ou les autres vis 23, 28 sont des vis à téton en regard desquelles les évidements 25, 27 respectifs de l'embout 17 sont cylindriques de révolution, comme illustré à la figure 3B.

Comme déjà mentionné, les dispositions conformes à l'invention peuvent être mises en oeuvre pour solidariser tout ou partie des pièces entrant dans la constitution de l'équipage tournant d'entraînement du rotor 2 de la pompe à partir des moyens moteurs 5 comme montré à la figure 1.

Ainsi, il est possible de prévoir que c'est l'arbre 14 du rotor 2 qui est agencé pour former l'organe B mâle et que c'est l'extrémité correspondante ou demi-accouplement 9b correspondant du second accouplement 9 articulé qui est agencé pour former l'organe A femelle. Et/ou on peut prévoir que c'est l'arbre intermédiaire 8 qui est agencé pour former l'organe B mâle et que c'est l'extrémité correspondante ou demi-accouplement 9a du second accouplement 9 articulé qui est agencé pour former l'organe A femelle. Et/ou on peut prévoir que c'est l'arbre intermédiaire 8 qui est agencé pour former l'organe B mâle et que c'est l'extrémité correspondante ou demi-accouplement 10b du premier accouplement 10 articulé qui est agencé pour former l'organe A femelle. Et/ou on peut prévoir que c'est l'arbre moteur 6 qui est agencé pour former l'organe B mâle et que c'est l'extrémité correspondante ou demi-accouplement 10a du premier accouplement 10 articulé qui est agencé pour former l'organe A femelle.

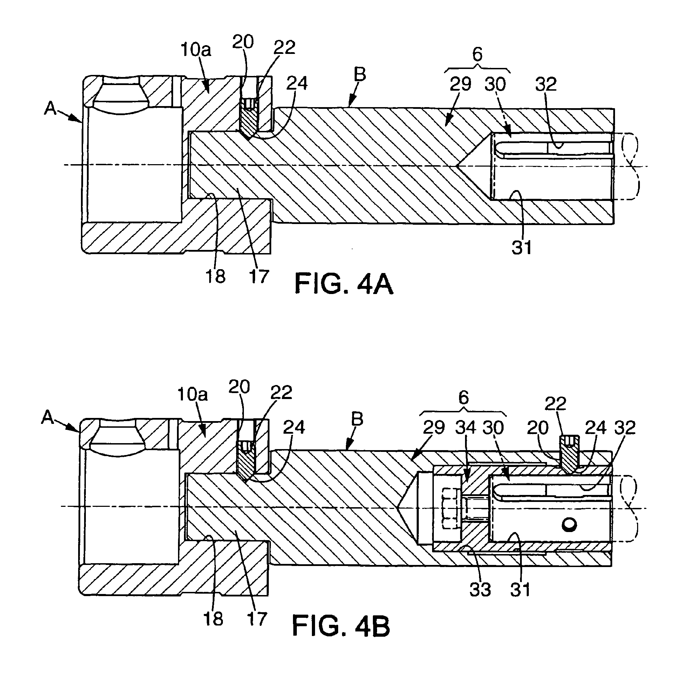

En pratique, comme illustré à la figure 4A, l'arbre moteur 6 comprend un arbre de liaison 29 qui est interposé entre ladite extrémité correspondante ou demi-accouplement 10a du premier accouplement 10 articulé et un arbre de sortie 30 (montré en trait spectral) des moyens moteurs 5 ; l'arbre de sortie 30 est par exemple reçu dans un alésage 31 axial rainuré en 32 prévu dans l'extrémité correspondante de l'arbre de liaison 29 et la solidarisation en rotation de l'arbre de sortie 30, lui aussi rainuré, et de l'arbre de liaison 29 est réalisée par une clavette (non visible). C'est alors l'extrémité 17 correspondante de l'arbre de liaison 29 qui est agencée pour former l'organe B mâle, tandis que le demi-accouplement 10a du premier accouplement 10 articulé constitue l'organe A femelle.

Selon une autre configuration utilisée également en pratique et illustrée à la figure 4B, l'extrémité de l'arbre de liaison 29 située du côté des moyens moteurs 5 est munie d'un alésage 33 axial qui abrite au moins en partie une fourrure 34 amovible (fourrure d'adaptation), elle-même percée du susdit alésage 31 axial rainuré en 32 ayant un diamètre adapté à un diamètre donné de l'arbre de sortie 30 (montré en trait spectral) des moyens moteurs 5. Dans ce cas, on peut aussi prévoir que l'extrémité correspondante de l'arbre de liaison 29 est agencée pour former l'organe A femelle et la fourrure d'adaptation 34 est agencée pour former l'organe B mâle (seule la vis pointeau 22 est ici visible).

## Revendications

1. Dispositif de pompage comportant :
- une pompe (1) à cavités progressives ou pompe Moineau comprenant un rotor hélicoïdal (2) intérieur à une cavité hélicoïdale (4) d'un stator extérieur (3),
- des moyens moteurs (5) pour entraîner le rotor (2), lesdits moyens moteurs entraînant un arbre moteur (6) sensiblement coaxial à l'axe de la cavité statorique (4),
- un arbre intermédiaire (8) qui est accouplé en rotation respectivement à l'arbre moteur (6) et à l'arbre (14) du rotor (2),
- un premier accouplement (10) articulé ayant une extrémité (10a) solidarisée à l'arbre moteur (6) et son autre extrémité (10b) solidarisée à l'arbre intermédiaire (8),
- un second accouplement (9) articulé ayant une extrémité (9a) solidarisée à l'arbre intermédiaire (8) et son autre extrémité (9b) solidarisée à l'arbre (14) du rotor (2), et
- des moyens de solidarisation pour solidariser les deux organes (A, B) constitués de deux des susdites pièces solidarisées,
**caractérisé**
**en ce que** lesdits deux organes (A, B) solidarisés sont agencés sous forme d'un organe (B) mâle comprenant un embout (17) axial et d'un organe (A) femelle comprenant un logement (18) axial propre à recevoir ledit embout (17) sans jeu notable,
**en ce que** la paroi latérale (19) définissant ledit logement (18) axial de l'organe (A) femelle est munie d'au moins deux perçages (20, 21) taraudés radiaux, décalés angulairement et non mutuellement alignés et abritant respectivement deux vis (22, 23) dont une au moins est une vis pointeau (22), et
**en ce que** ledit embout (17) axial de l'organe (B) mâle comporte au moins deux évidements (24, 25) radiaux situés respectivement en regard desdits perçages (20, 21) radiaux et dont au moins un (24) est conique ou tronconique en regard de la susdite vis pointeau (22) pour recevoir l'extrémité de celle-ci.

2. Dispositif de pompage selon la revendication 1, **caractérisé en ce que** la paroi latérale (19) du logement (18) de l'organe (A) femelle comporte trois perçages (20, 21, 26) taraudés radiaux répartis angulairement et l'embout (17) axial de l'organe (B) mâle comporte trois évidements (24, 25, 27) radiaux répartis angulairement et situés respectivement en regard des susdits perçages (20, 21, 26).

3. Dispositif de pompage selon la revendication 2, **caractérisé en ce que** les perçages (20, 21, 26) et évidements (24, 25, 27) respectifs sont répartis angulairement de façon équidistante.

4. Dispositif de pompage selon l'une quelconque des revendications 1 à 3, **caractérisé en ce que** toutes les vis (22, 23, 28) sont des vis pointeau et **en ce que** tous les évidements (24, 25, 27) sont coniques ou tronconiques.

5. Dispositif de pompage selon l'une quelconque des revendications 1 à 3, **caractérisé en ce qu'**une seule vis (22) est une vis pointeau et **en ce que** la ou les autres vis (23, 28) sont des vis à téton en regard desquelles les évidements (25, 27) respectifs de l'embout (17) sont cylindriques de révolution.

6. Dispositif de pompage selon l'une quelconque des revendications 1 à 5, **caractérisé en ce que** c'est l'arbre (14) du rotor (2) qui est agencé pour former l'organe (B) mâle et c'est l'extrémité (9b) correspondante du second accouplement (9) articulé qui est agencée pour former l'organe (A) femelle.

7. Dispositif de pompage selon l'une quelconque des revendications 1 à 6, **caractérisé en ce que** c'est l'arbre intermédiaire (8) qui est agencé pour former l'organe (B) mâle et c'est l'extrémité (9a) correspondante du second accouplement (9) articulé qui est agencée pour former l'organe (A) femelle.

8. Dispositif de pompage selon l'une quelconque des revendications 1 à 7, **caractérisé en ce que** c'est l'arbre intermédiaire (8) qui est agencé pour former l'organe (B) mâle et c'est l'extrémité (10b) correspondante du premier accouplement (10) articulé qui est agencée pour former l'organe (A) femelle.

9. Dispositif de pompage selon l'une quelconque des revendications 1 à 8, **caractérisé en ce que** c'est l'arbre moteur (6) qui est agencé pour former l'organe (B) mâle et c'est l'extrémité (10a) correspondante du premier accouplement (10) articulé qui est agencée pour former l'organe (A) femelle.

10. Dispositif de pompage selon la revendication 9, dans lequel l'arbre moteur (6) comprend un arbre de liaison (29) interposé entre un arbre de sortie (30) des moyens moteurs (5) et ladite extrémité (10a) correspondante du premier accouplement (10) articulé, **caractérisé en ce que** c'est l'extrémité correspondante de l'arbre de liaison (29) qui est agencée pour former l'organe (B) mâle.

11. Dispositif de pompage selon la revendication 9 ou 10, dans lequel l'arbre de liaison (29) abrite au moins en partie une fourrure (34) amovible d'adaptation à un arbre de sortie (30) de diamètre donné des moyens moteurs (5), **caractérisé en ce que** l'arbre de liaison (29) est agencé pour former l'organe (A) femelle et la fourrure (34) d'adaptation est agencée pour former l'organe (A) mâle.

## Claims

1. Pumping device comprising:
- a progressive cavity pump (1) or Moineau pump comprising a helical rotor (2) inside a helical cavity (4) of an external stator (3),
- motor means (5) for driving the rotor (2), said motor means driving a motor shaft (6) substantially coaxial with the axis of the stator cavity (4),
- an intermediate shaft (8) which is coupled in rotation respectively with the motor shaft (6) and the shaft (14) of the rotor (2),
- a first articulated shaft coupling (10) with one end (10a) joined to the motor shaft (6) and its other end (10b) joined to the intermediate shaft (8),
- a second articulated shaft coupling (9) with one end (9a) joined to the intermediate shaft (8) and its other end (9b) joined to the shaft (14) of the rotor (2), and
- joining means for joining the two elements (A, B) formed by two of said joined parts,
**characterised**
**in that** the two joined elements (A, B) are arranged in the form of a male element (B) comprising an axial end piece (17) and a female element (A) comprising an axial housing (18) designed to accommodate said end piece (17) without any significant clearance,
**in that** the lateral wall (19) defining said axial housing (18) of the female element (A) is provided with at least two radially tapped bores (20, 21) which are angularly offset and not mutually aligned and house two screws (22, 23) respectively, at least one of which is a tapered screw (22), and
**in that** said axial end piece (17) of the male element (B) has at least two radial recesses (24, 25) respectively disposed facing said radial bores (20, 21) and at least one (24) of which facing said pointed screw (22) is conical or frustoconical in order to receive the end thereof.

2. Pumping device as claimed in claim 1, **characterised in that** the lateral wall (19) of the housing (18) of the female element (A) has three radially tapped bores (20, 21, 26) distributed at an angle and the axial end piece (17) of the male element (B) has three radial recesses (24, 25, 27) distributed at an angle and respectively disposed facing said bores (20, 21, 26).

3. Pumping device as claimed in claim 2, **characterised in that** the respective bores (20, 21, 26) and recesses (24, 25, 27) are distributed at equidistant angles.

4. Pumping device as claimed in any one of claims 1 to 3, **characterised in that** all of the screws (22, 23, 28) are tapered screws and all of the recesses (24, 25, 27) are conical or frustoconical.

5. Pumping device as claimed in any one of claims 1 to 3, **characterised in that** a single screw (22) is a tapered screw and the other screw or screws (23, 28) are machine screws facing which the respective recesses (25, 27) of the end piece (17) are cylindrical in revolution.

6. Pumping device as claimed in any one of claims 1 to 5, **characterised in that** it is the shaft (14) of the rotor (2) which is designed to form the male element (B) and it is the co-operating end (9b) of the second articulated shaft coupling (9) which is designed to form the female element (A).

7. Pumping device as claimed in any one of claims 1 to 6, **characterised in that** it is the intermediate shaft (8) which is designed to form the male element (B) and it is the co-operating end (9a) of the second articulated shaft coupling (9) which is designed to form the female element (A).

8. Pumping device as claimed in any one of claims 1 to 7, **characterised in that** it is the intermediate shaft (8) which is designed to form the male element (B) and it is the co-operating end (10b) of the first articulated shaft coupling (10) which is designed to form the female element (A).

9. Pumping device as claimed in any one of claims 1 to 8, **characterised in that** it is the motor shaft (6) which is designed to form the male element (B) and it is the co-operating end (10a) of the first articulated shaft coupling (10) which is designed to form the female element (A).

10. Pumping device as claimed in claim 9, in which the motor shaft (6) has a linking shaft (29) interposed between an output shaft (30) of the motor means (5) and said co-operating end (10a) of the first articulated shaft coupling (10), **characterised in that** it is the co-operating end of the linking shaft (29) which is designed to form the male element (B).

11. Pumping device as claimed in claim 9 or 10, in which the linking shaft (29) at least partially houses a removable adapter sleeve (34) for an output shaft (30) of the motor means (5) of a given diameter, **characterised in that** the linking shaft (29) is designed to form the female element (A) and the adapter sleeve (34) is designed to form the male element (B).

## Patentansprüche

1. Pümpvorrichtung, umfassend:
- eine Exzenterschneckenpumpe oder Moineau-Pumpe (1), die einen inneren schneckenförmigen Rotor (2) in einem schneckenförmigen Hohlraum (4) eines äußeren Stators (3) aufweist,
- Antriebsmittel (5) für den Antrieb des Rotors (2), wobei die Antriebsmittel eine zur Achse des Statorhohlraums (4) im wesentlichen koaxiale Antriebswelle (6) antreiben,
- eine Zwischenwelle (8), die mit der Antriebswelle (6) und mit der Welle (14) des Rotors (2) jeweils drehbar gekoppelt ist,
- eine erste Gelenkkupplung (10), deren eines Ende (10a) mit der Antriebswelle (6) und deren anderes Ende (10b) mit der Zwischenwelle (8) zusammengeschlossen ist,
- eine zweite Gelenkkupplung (9), deren eines Ende (9a) mit der Zwischenwelle (8) und deren anderes Ende (9b) mit der Welle (14) des Rotors (2) zusammengeschlossen ist, und
- Zusammenschlussmittel für das Zusammenschließen der beiden Elemente (A, B), die aus zwei der vorgenannten zusammengeschlossenen Teile gebildet sind,
**dadurch gekennzeichnet,**
**dass** die beiden zusammengeschlossenen Elemente (A, B) ausgebildet sind in Form eines Vaterelements (B), das einen axialen Ansatz (17) aufweist, und eines Mutterelements (A), das einen für die Aufnahme des Ansatzes (17) ohne nennenswertes Spiel geeigneten Sitz (18) aufweist, dass die Seitenwand (19), die den axialen Sitz (18) des Mutterelements (A) begrenzt, mit mindestens zwei radialen Gewindebohrungen (20, 21) versehen ist, die unter einem Winkel versetzt und nicht aufeinander ausgerichtet sind und jeweils zwei Schrauben (22, 23) aufnehmen, von denen wenigstens eine eine Arretierschraube (22) ist, und
**dass** der axiale Ansatz (17) des Vaterelements (B) wenigstens zwei radiale Aussparungen (24, 25) aufweist, die sich jeweils gegenüber den vorgenannten radialen Bohrungen (20, 21) befinden und von denen zumindest eine (24) gegenüber der vorgenannten Arretierschraube (22) konisch oder kegelstumpfförmig ist, um das Ende derselben aufzunehmen.

2. Pumpvorrichtung nach Anspruch 1,
**dadurch gekennzeichnet, dass** die Seitenwand (19) des Sitzes (18) des Mutterelements (A) drei radiale Gewindebohrungen (20, 21, 26) aufweist, die unter einem Winkel verteilt sind, und dass der axiale Ansatz (17) des Vaterelements (B) drei radiale Aussparungen (24, 25, 27) aufweist, die unter einem Winkel verteilt sind und den vorgenannten Bohrungen (20, 21, 26) jeweils gegenüberliegen.

3. Pumpvorrichtung nach Anspruch 2,
**dadurch gekennzeichnet,**
**dass** die jeweiligen Bohrungen (20, 21, 26) und Aussparungen (24, 25, 27) unter einem Winkel abstandsgleich verteilt sind.

4. Pumpvorrichtung nach einem der Ansprüche 1 bis 3,
**dadurch gekennzeichnet, !**
**dass** sämtliche Schrauben (22, 23, 28) Arretierschrauben sind und dass sämtliche Aussparungen (24, 25, 27) konisch oder kegelstumpfförmig sind.

5. Pumpvorrichtung nach einem der Ansprüche 1 bis 3,
**dadurch gekennzeichnet,**
**dass** nur eine Schraube (22) eine Arretierschraube ist und dass die andere oder die anderen Schrauben (23, 28) Ansatzschrauben sind; denen gegenüber die jeweiligen Aussparungen (25, 27) des Ansatzes (17) rotationszylindrisch sind.

6. Pumpvorrichtung nach einem der Ansprüche 1 bis 5,
**dadurch gekennzeichnet,**
**dass** die Welle (14) des Rotors (2) dafür ausgebildet ist, das Vaterelement (B) zu bilden, und dass das entsprechende Ende (9b) der zweiten Gelenkkupplung (9) dafür ausgebildet ist, das Mutterelement (A) zu bilden.

7. Pumpvorrichtung nach einem der Ansprüche 1 bis 6,
**dadurch gekennzeichnet,**
**dass** die Zwischenwelle (8) dafür ausgebildet ist, das Vaterelement (B) zu bilden, und dass das entsprechende Ende (9a) der zweiten Gelenkkupplung (9) dafür ausgebildet ist, das Mutterelement (A) zu bilden.

8. Pumpvorrichtung nach einem der Ansprüche 1 bis 7,
**dadurch gekennzeichnet,**
**dass** die Zwischenwelle (8) dafür ausgebildet ist, das Vaterelement (B) zu-bilden, und dass das entsprechende Ende (10b) der ersten Gelenkkupplung (10) dafür ausgebildet ist, das Mutterelement (A) zu bilden.

9. Pumpvorrichtung nach einem der Ansprüche 1 bis 8,
**dadurch gekennzeichnet,**
**dass** die Antriebswelle (6) dafür ausgebildet ist, das Vaterelement (B) zu bilden, und dass das entsprechende Ende (10a) der ersten Gelenkkupplung (10) dafür ausgebildet ist, das Mutterelement (A) zu bilden.

10. Pumpvorrichtung nach einem der Ansprüche 1 bis 9, bei der die Antriebswelle (6) eine Verbindungswelle (29) umfasst, die zwischen einer Ausgangswelle (30) der Antriebsmittel (5) und dem entsprechenden Ende (10a) der ersten Gelenkkupplung (10) angeordnet ist,
**dadurch gekennzeichnet,**
**dass** das entsprechende Ende der Verbindungswelle (29) dafür ausgebildet ist, das Vaterelement (B) zu bilden.

11. Pumpvorrichtung nach Anspruch 9 oder 10, bei der die Verbindungswelle (29) zumindest zum Teil ein abnehmbares Futterteil (34) für die Anpassung an eine Ausgangswelle (30) mit einem durch die Antriebsmittel (5) gegebenen Durchmesser aufnimmt,
**dadurch gekennzeichnet,**
**dass** die Verbindungswelle (29) dafür ausgebildet ist, das Mutterelement (A) zu bilden, und dass das Anpassfutterteil (34) dafür vorgesehen ist, das Vaterelement (B) zu bilden.
